# EUROPEAN PATENT APPLICATION

(11) **EP 4 850 890 A1**
(43) Date of publication of application: **09.12.2026**
(21) Application number: 26182558.2
(22) Date of filing: 02.06.2026
(51) Int. Cl.: B29C 64/112, B26D 7/26, B26D 7/27, B26F 1/38, B29C 64/106, B31D 1/02, B32B 27/00, B41J 3/407, B41J 11/66

(54) **DIGITAL FLATBED CUTTERS FOR FORMING DOMED STICKERS AND CORRESPONDING METHOD**

(30) Priority: 04.06.2025 GB 202508748
(71) Applicant: Vivid Laminating Technologies Limited, Leicestershire LE65 2UZ (GB)
(72) Inventor: WARD, Gavin, Leicester, LE65 2UZ (GB)
(74) Representative: Serjeants LLP

(57) **Abstract**

A digital flatbed cutter (1) is described. The digital flatbed cutter (1) is configured for working a workpiece (W) being label stock with a cover layer, an adhesive layer, and a backing layer. The digital flatbed cutter (1) includes a flatbed (2) on which the workpiece (W) may be positioned. A head unit (4) is movable laterally along an x-axis direction and a perpendicular y-axis direction in a parallel plane above the flatbed (2). A cutter head (8) is mounted to the head unit and includes a knife or blade (12) for kiss cutting the cover layer of the workpiece (W). The knife or blade (12) is movable along a z-axis direction that is normal to the plane and perpendicular to the x- and y-axes. A coating material applicator head (22) is mounted to the head unit (4) and is configured to apply coating material to the cover layer of the workpiece (W). A control unit is configured to control the movement of the head unit (4) using a digital file with cutting information which specifies where the cover layer of the workpiece (W) should be kiss cut by the knife or blade (12) of the cutter head (8), and coating material application information which specifies where coating material should be applied to the cover layer of the workpiece (W).

## Description

### Technical field

The invention relates to digital flatbed cutters, and in particular to cutters that may be used to cut a workpiece. The workpiece may be a sheet of label stock with a cover layer (or "face stock"), an adhesive layer, and a backing layer (or "liner"). Such label stock may be used to produce self-adhesive stickers or labels, for example.

### Background of the invention

It is known to produce domed stickers (sometimes referred to as domed labels or three-dimensional (3D) stickers or labels) by applying a coating material to the cover layer (or "face stock") of a sheet of label stock.

A repeating pattern or array of images or designs might be printed on the surface of the cover layer, e.g., using an inkjet or laser printer. The label stock is then kiss cut around the images or designs to form an array of removable portions of the cover layer where each removable portion coincides with one of the printed images or designs. As used herein, the term "kiss cut" refers to a cutting technique where only the cover layer of the label stock is cut, leaving the backing layer intact. It is commonly used for producing stickers, labels etc. where a removable portion (e.g., an individual sticker or label) is to be cleanly removed from the backing layer and then adhered to a surface using the exposed adhesive on the underside of the cover layer. The backing layer may include a release coating that contacts the adhesive layer and that helps the removable portions to be removed easily and cleanly from the backing layer.

The removable portions may have any suitable shape - e.g., they may be circular, triangular, rectangular, square or oval, or they may have a more complicated shape, for example.

When producing domed stickers, an amount of coating material is applied to each precut removable portion of the cover layer. When the coating material it applied to each removable portion, its surface tension causes it to spread out towards the edge and it is retained by the kiss cut in the cover layer that defines the periphery of the respective removable portion forming a domed shape. In other words, the kiss cuts act as a barrier to prevent the applied coating material from spreading onto the remainder of the cover layer that lies outside the discrete removable portions. Once the coating material has been applied to the removable portions, the sheet of label stock may be heated to cure the coating material, which hardens to form a durable (e.g., scratch and water resistant) coating with a domed shape. The coating material is typically about 2-3 mm thick at the centre of the removable portion - the smaller the surface area of the removable portion the greater the thickness - and tapers down towards the periphery to form the characteristic dome shape when viewed in profile. A polyurethane resin is often used as a coating material because it is transparent when cured. The printed image or design is therefore visible through the dome of applied coating material. Alternatively, the coating material may be applied to each removable portion and then overprinted with an image or design after the coating material has been cured. In this case, the coating material may be opaque.

The coating material may be applied by hand or using a coating machine with one or more coating material applicators.

Digital flatbed cutters are known. In a typical cutter of this type, a workpiece such as a sheet of card or paper stock is placed on a flatbed. An example of a digital flatbed cutter is the VELOBLADE^{®} product supplied by Vivid Laminating Technologies Ltd of Matrix House, Norman Court, Ivanhoe Business Park, Ashby de la Zouch, Leicestershire, LE65 2UZ, United Kingdom.

The flatbed may be the upper part of a conveyor belt, for example. A sheet-feed may hold a stack of workpieces at one end of the conveyor belt, and the conveyor belt may move each workpiece in turn from the sheet-feed to a working position where it is worked by the cutter, e.g., where it is cut and optionally creased. Each workpiece is then moved by the conveyor belt to a collection tray. Each workpiece may already be printed with one or more images or designs and one or more registration marks.

The digital flatbed cutter normally includes a head unit that is mounted above the flatbed on an assembly that may move the head unit in a controlled way in a parallel plane above the flatbed (i.e., in a plane defined by an x-axis and a perpendicular y-axis). The head unit may move in a first direction (i.e., a y-axis direction) along a support rail that extends over the flatbed. The support rail itself may move in a second direction (i.e., an x-axis direction) along side rails that are located at the sides of the flatbed, for example. The conveyor belt is normally configured to move the workpiece in the x-axis direction.

The head unit may include a cutter head with a knife or blade for cutting the workpiece. The knife or blade may typically move vertically relative to the flatbed (i.e., along a z-axis direction that is perpendicular to both the x- and y-axes directions). In particular, the knife or blade may be moved between a first position where it is spaced apart from the workpiece and a second position where it is in contact with the workpiece for cutting.

The head unit may be aligned precisely with the workpiece before it is worked. For example, the digital flatbed cutter may include a camera and use optical recognition of the one or more printed registration marks on the workpiece or the outline of the workpiece on the flatbed. Once the head unit has been precisely aligned relative to the workpiece positioned on the flatbed, the workpiece may be cut by moving the head unit and operating the cutter head. The cutting may be based on information stored in a digital file that is used to control the operation of the digital flatbed cutter. In particular, the digital file may include cutting information for controlling the movement of the head unit and information for controlling the cutter head, for example to raise or lower the knife or blade.

### Summary of the invention

The present invention provides a digital flatbed cutter configured for working a workpiece being label stock with a cover layer (or "face stock"), an adhesive layer, and a backing layer, the digital flatbed cutter comprising:
a flatbed on which the workpiece may be positioned;
a head unit that is movable laterally along an x-axis direction and a perpendicular y-axis direction in a parallel plane above the flatbed;
a cutter head mounted to the head unit and including a knife or blade for kiss cutting the cover layer of the workpiece, the knife or blade being movable along a z-axis direction that is normal to the plane and perpendicular to the x- and y-axes;
a coating material applicator head mounted to the head unit and configured to apply coating material to the cover layer of the workpiece; and
a control unit configured to control the movement of the head unit using a digital file with cutting information which specifies where the cover layer of the workpiece should be kiss cut by the knife or blade of the cutter head, and coating material application information which specifies where coating material should be applied to the cover layer of the workpiece.

If the digital flatbed cutter is used to form domed stickers, the cutting information may specify that the cover layer of the workpiece is kiss cut to form an array of removable portions of the cover layer. The periphery of each removable portion is defined by a respective kiss cut in the cover layer. As mentioned above, only the cover layer of the label stock is cut by the knife or blade of the cutter head, leaving the backing layer intact. The removable portions may have any suitable shape - e.g., they may be circular, triangular, rectangular, square or oval, or they may have a more complicated shape, for example. The removable portions typically all have the same shape.

Coating material may be applied to each removable portion of the cover layer. In particular, a pre-determined amount of coating material may be applied inside each kiss cut that defines the periphery of the respective removable portion. Coating material may be applied by the coating material applicator head generally to a middle part of each removable portion, for example. As described above, the surface tension of the liquid coating material causes it to spread and is retained by the kiss cuts that define the periphery of the removable portions. In other words, despite the kiss cuts extending into the cover layer, the kiss cuts act as a barrier and prevent the applied coating material from spreading onto the remainder of the cover layer that lies outside the array of removable portions.

The coating material applicator head may be configured to apply transparent coating material to the cover layer of the workpiece.

The coating material applicator head may be configured to apply a polyurethane resin to the cover layer of the workpiece.

At least an applicator part of the coating material applicator head, e.g., a nozzle or other liquid applicator, may be movable along the z-axis direction. In particular, the applicator part may be moved between a second position where it is close to the workpiece (or in contact with the workpiece) when the coating material is being applied, and a first position where it is spaced further apart from the workpiece. Bringing the applicator part closer to the workpiece may improve accuracy when the coating material is applied to each removable portion of the cover layer. It may also help to position the applicator part of the coating material applicator head at an optimum distance from the workpiece surface. This allows different thicknesses of workpiece to be accommodated. In some cases, the applicator part may move from the second position towards the first position along the z-axis direction whilst the coating material is being applied to the surface of the cover layer.

The digital flatbed cutter may further comprise a camera or other optical device. The control unit may be configured to use optical recognition of one or more printed registration marks on the workpiece or the outline of the workpiece to determine the position of the workpiece on the flatbed. Determining the position of the workpiece may improve the accuracy of the cutting and coating material application. In particular, the cutting information and the coating material application information in the digital file may be modified by the control unit based on the determined position of the workpiece, e.g., to compensate for any mis-alignment of the workpiece on the flatbed.

The flatbed may be a conveyor belt. The conveyor belt may be configured to move the workpiece along the x-axis direction.

The head unit may be mounted on a support rail that extends over the flatbed. The head unit may be moved along the support rail (i.e., along the y-axis direction) by an actuator. The support rail may be mounted on one or more side rails. The support rail may be moved along the one or more side rails (i.e., along the x-axis direction) by one or more actuators. The side rails may be located at opposite sides of the flatbed, for example, and are arranged substantially perpendicular to the support rail. The support rail and side rails allow the head unit to be moved in any direction under precise control in one or both of the x- and y-axes - i.e., in the parallel plane above the flatbed. It will be understood that other ways of moving the head unit under precise control may also be used.

The present invention further provides a method of forming domed stickers using a digital flatbed cutter, the digital flatbed cutter comprising:
a flatbed;
a head unit that is movable laterally along an x-axis direction and a perpendicular y-axis direction in a parallel plane above the flatbed;
a cutter head mounted to the head unit and including a knife or blade, the knife or blade being movable along a z-axis direction that is normal to the plane and perpendicular to the x- and y-axes; and
a coating material applicator head mounted to the head unit;
the method comprising:
positioning a workpiece on the flatbed, the workpiece being label stock with a cover layer, an adhesive layer, and a backing layer;
using the knife or blade of the cutter head to kiss cut the cover layer of the workpiece to form an array of removable portions of the cover layer; and
using the coating material applicator head to apply coating material to each removable portion of the cover layer to form discrete domes of applied coating material, each domed sticker being defined by a removable portion of the cover layer and the overlying dome of applied coating material.

As explained above, the applied coating material is bounded by the kiss cut that defines the respective removable portion. A pre-determined amount of coating material may be applied to each removable portion.

The method may further comprise printing an array of images or designs on the surface of the cover layer before using the knife or blade of the cutter head to kiss cut the cover layer of the workpiece to form an array of removable portions of the cover layer, each removable portion coinciding with a respective printed image or design. Each image or design is then covered by a dome of applied coating material.

The method may further comprise curing the workpiece to harden the applied coating material, e.g., by heating the workpiece. If the applied coating material is transparent, any image or design that is printed on the surface of the cover layer, and now overlaid by the dome of coating material, is still visible through the coating material.

The method may further comprise curing the workpiece to harden the applied coating material, then overprinting each hardened discrete dome of applied coating material with an image or design. In this case, the hardened coating material may be opaque, for example.

The coating material may be a polyurethane resin.

The cutter head may be a primary cutter head and may include a primary cutter assembly with a primary knife or blade for cutting the workpiece. The primary cutter assembly may be movable along a z-axis direction that is normal to the plane and perpendicular to the x- and y-axes. The flatbed digital cutter may further include a cutter plate removably mounted to the primary cutter assembly. Alternatively, the primary cutter assembly may be configured to removably mount a cutter plate. A separate cutter plate may be configured to be removably mounted to a primary cutter assembly of a digital flatbed cutter, such as the digital flatbed cutter described above.

The cutter plate may comprise at least one secondary knife or blade for cutting the workpiece in parallel with the primary knife or blade.

The cutter plate may comprise at least one mounting means, each mounting means being configured to mount a respective secondary knife or blade for cutting the workpiece in parallel with the primary knife or blade.

Although the cutter plate is removably mounted (or configured to be removably mounted) to the primary cutter assembly, it will be readily understood that when mounted it will remain temporarily fixed to the primary cutter assembly until it is deliberately removed by a user so that during a cutting process a rigid mechanical connection is maintained between the cutter plate and the primary cutter assembly. The rigid mechanical connection ensures that the cutter plate moves in tandem with the primary cutter assembly, e.g., so that the one or more secondary knives or blades are raised and lowered in tandem with the primary knife or blade that is mounted on the primary cutter assembly, and that the one or more secondary knives or blades move in tandem with the primary knife or blade when the workpiece is being kiss cut and the primary cutter head and assembly are being moved by the head unit. Put another way, the rigid mechanical connection ensures that any movement of the primary knife or blade is mirrored substantially exactly by each secondary knife or blade for consistent parallel cutting of the workpiece. The mounted cutter plate may be temporarily fixed to the primary cutter assembly by any suitable means, e.g., one or more mechanical fixings.

The cutter plate is preferably substantially rigid and may maintain a fixed orientation with respect to the primary cutter assembly during the cutting process. The cutter plate may be formed from any suitable material (e.g., metal) and may have any suitable shape or construction. For example, the cutter plate may have a flat or planar construction and may be shaped to be removably mounted to the primary cutter assembly and the optional secondary cutter assembly - see below.

The primary knife or blade and each secondary knife or blade may be configured for kiss cutting the cover layer of the workpiece.

When the cutter plate is mounted to the primary cutter assembly, the digital flatbed cutter may carry out two or more identical cutting actions simultaneously or in parallel. This is because the movement of the primary knife or blade is mirrored by each secondary knife or blade on the cutter plate. As described in more detail below, this may significantly reduce the time needed to kiss cut around an array of printed images or designs and thereby form the array of removable portions of the cover layer. Because the cutter plate is removably mounted (or configured to be removably mounted) it may be removed or dismounted from the primary cutter assembly when it is not needed. Without the cutter plate, the digital flatbed cutter may be used like a conventional cutter where the kiss cutting is carried out using the primary knife or blade only.

The cutter plate is movable along the z-axis direction by the primary cutter assembly. This means that all of the knives or blades of the digital flatbed cutter will be raised and lowered simultaneously by the action of the primary cutter assembly.

If the cutter plate includes mounting means for mounting the secondary knives or blades, the mounting means are preferably substantially evenly spaced along the cutter plate so that the secondary knives or blades are substantially evenly spaced along the cutter plate. In other words, the secondary knives or blades are preferably spaced apart by the same predetermined distance. When the cutter plate is mounted to the primary cutter assembly, the closest secondary knife or blade to the primary cutter assembly is preferably spaced apart from the primary knife or blade by the same predetermined distance - i.e., so that all of the knives or blades of the digital flatbed cutter are spaced apart substantially evenly. The cutter plate is preferably mounted to the primary cutter assembly so that it extends substantially along the y-axis direction of the digital flatbed cutter. This means that the one or more secondary knives or blades are also spaced apart along the y-axis direction of the digital flatbed cutter - i.e., they extend laterally across the width of the flatbed. Sheet workpieces are normally accurately positioned on the flatbed, but it may be preferable to adjust the angle of the cutter plate relative to the primary cutter assembly in case the rows of images or designs are not perfectly aligned along the y-axis direction of the digital flatbed cutter. The cutter plate may therefore be pivotally mounted to the primary cutter assembly so that its angle may be adjusted to compensate for any slight misalignment of the workpiece on the flatbed before kiss cutting. The angle may be adjusted by a suitable actuator, which may optionally be provided as part of a secondary cutter assembly or secondary cutter head - see below. If the flatbed digital cutter does not have a secondary cutter head or assembly, the actuator may be provided as part of the primary cutter head or assembly, for example. The actuator may be a linear actuator or a rotary actuator, for example. When the precise orientation of the workpiece on the flatbed has been determined, the actuator may be controlled (e.g., by a control unit) to automatically adjust the angle of the cutter plate as required to match the alignment of the workpiece. It is expected that only small angle adjustments will be required - for example, adjustments of less than ±10° relative to the y-axis direction. Adjusting the angle of the cutting plate relative to the primary cutter assembly means that the cutter plate may be aligned perfectly with the rows of images or designs printed on the workpiece for more accurate parallel cutting.

Mounting a cutter plate with secondary knives or blades allows the digital flatbed cutter to efficiently kiss cut a workpiece that includes an (r x c) array of images or designs. For example, if the workpiece is printed with a 4 x 3 array of discrete images or designs these may be efficiently kiss cut around by using a cutter plate with two secondary knives or blades. When the cutter plate is mounted to the primary cutter assembly, the digital flatbed cutter will have a total of three knives or blades that are preferably substantially evenly spaced along the y-axis direction by the same predetermined distance. The knives or blades may therefore cut around the three images or designs in each row of the 4 x 3 array at the same time. It will be readily understood that the images or designs in the same row must be printed with an appropriate translation along the y-axis direction. In particular, a kiss cutting outline followed by the primary knife or blade will be mirrored by each of the secondary knives or blades but translated or shifted in the y-axis direction. If the knives or blades are spaced apart by a predetermined distance D, the kiss cutting outlines will be translated or shifted in the y-axis direction by the same predetermined distance D and the images or designs must be printed to that they are within each kiss cutting outline. The kiss cutting outlines in each row are identical and are translated in the y-axis direction without changing their size, shape or orientation. The secondary knives or blades will kiss cut in tandem with the primary knife or blade (i.e., they will be moved up and down by the primary cutter assembly and also over the workpiece by the head unit on which the primary cutter head is mounted) so that each knife or blade cuts a row of identical kiss cutting outlines. The kiss cutting outlines in each row may have any suitable shape but their maximum dimension in the y-axis direction should not exceed the predetermined distance D between the knives or blades otherwise the cutting outlines being kiss cut by the row of spaced knives or blades will overlap. When the first row of kiss cutting outlines has been cut, the head unit will be re-positioned and the knives or blades will simultaneously kiss cut the second row of kiss cutting outlines etc. Although all of the kiss cutting outlines in the array may often be identical, it is only necessary that the kiss cutting outlines in a single row are identical because they are cut together in a single cutting action. Each row may have a different kiss cutting outline. However, the kiss cutting outlines for a particular workpiece will have the same translation in the y-axis direction if they are cut in parallel using the same cutter plate. The image or design printed within each kiss cutting outline may be the same or different.

For further flexibility, a plurality of different cutter plates may be provided (e.g., as a kit) and the user may select and mount an appropriate cutter plate for a particular cutting process. Each cutter plate may have a different number of secondary knives or blades and/or each cutter plate may be configured for mounting two or more secondary knives or blades with different spacing therebetween (i.e., where the secondary knives or blades are spaced apart by different predetermined distances). Each cutter plate may be configured for mounting just one secondary knife or blade with a different spacing between the secondary knife or blade and the primary knife or blade when the cutter plate is mounted to the primary cutter assembly. Alternatively, the cutter plate may allow the spacing between the secondary knives or blades to be manually adjusted. In each case, the same spacing should preferably be provided between the secondary knife or blade that is closest to the primary cutter assembly and the primary knife or blade so that all of the knives or blades are preferably substantially evenly spaced apart along the y-axis direction when the cutter plate is mounted to the primary cutter assembly. The cutter plate may also allow the spacing between the closest secondary knife or blade and the primary knife or blade to be manually adjusted.

The primary cutter assembly may further comprise a plate mount configured for removably mounting a selected one of the plurality of different cutter plates.

In practice, it will be readily understood that the spacing between the knives or blades does not have to be the same - i.e., the knives or blades do not necessarily need to be evenly spaced along the y-axis direction. If the spacings are known, and remain fixed during the cutting process, the workpiece may be printed with an appropriate translation or shift between the images or designs in the same row. But it will normally be most convenient to make the spacing between the knives or blades the same because this may simplify the pre-printing process. A digital file for printing a workpiece may be created for use with a particular cutting plate so that the printed workpiece has an array of images or designs with an appropriate number of images or designs in each row and with the appropriate translation or shift between the images or designs. The workpiece may then be printed (e.g., by inkjet or laser printing) using the digital file in the knowledge that it may be efficiently kiss cut using the digital flatbed cutter if a particular cutter plate is fitted. For example, if a particular cutter plate has n secondary knives or blades, where n is an integer, and the same predetermined distance D between each knife or blade, the digital file for printing may include an (r x (n+1)) array of discrete images or designs, where (n+1) indicates the number of images or designs arranged along the y-axis direction (i.e., number of columns), and where the images or designs in each row are translated or shifted by the same predetermined distance D. If the primary and secondary knives or blades are spaced apart by different distances along the y-axis direction (e.g., with a distance D1 between the primary knife or blade and a first secondary knife or blade of the cutting plate, a distance D2 between the first secondary knife or blade and a second secondary knife or blade, and so on) the images or designs in each row will be appropriately translated or shifted (e.g., a translation of D1 between the first and second designs or images, a translation of D2 between the second and third designs or images, and so on).

Each secondary knife or blade may be removably mounted to the cutter plate. Each mounting means may have any suitable construction. Each mounting means may be an opening in the cutter plate for removably receiving a respective secondary knife or blade, for example. Each mounting means may also comprise a suitable fitting or connector that cooperates with a matching fitting or connector on the secondary knife or blade. The mounting means allow different types of secondary knife or blade to be fitted to a particular cutter plate. Each secondary knife or blade will remain temporarily fixed to the cutter plate or its respective mounting means until it is deliberately removed by a user. The primary knife or blade may also be removably mounted to the primary cutter assembly so that different types of primary knife or blade may be fitted to the primary cutter assembly.

A first end of the cutter plate may be removably mounted (or adapted to be removably mounted) to the primary cutter assembly. The digital flatbed cutter may further comprise a secondary cutter head including a secondary cutter assembly being movable in tandem with the primary cutter assembly. This includes movement of the secondary cutter assembly in the z-axis direction relative to the rest of the secondary cutter head. In other words, the primary and secondary cutter assemblies may be raised and lowered in tandem. A second end of the cutter plate may be removably mounted (or adapted to be removably mounted) to the secondary cutter assembly. Using a secondary cutter assembly helps to maintain the orientation of the cutter plate and may also help to avoid flexing of the cutter plate in the z-axis direction that may adversely affect the quality of the kiss cutting - i.e., prevent cutting into the backing layer of the label stock. The digital flatbed cutter may further comprise a support rail that extends over the flatbed. The head unit may be configured to be movable along the support rail in the y-axis direction. The primary cutter head is mounted to the head unit and is moved along the support rail in the y-axis direction by the head unit. The secondary cutter head may be configured to be movable along the support rail in the y-axis direction in tandem with the head unit and the primary cutter head. The secondary cutter head is not necessarily driven to move along the support rail by its own actuator, but rather it may be moved along the support rail by the primary cutter head through the mechanical connection that is provided by the cutter plate. The secondary cutter head may be moved manually along the support rail by a user if the cutter plate is not connected to the secondary cutter assembly. The secondary cutter head will normally include a suitable actuator for raising and lowering the secondary cutter assembly in tandem with the primary cutter assembly. The secondary cutter head or assembly may also include a suitable actuator for adjusting the angle of the cutter plate relative to the primary cutter assembly as described above. In particular, the actuator may move the second end of the cutter plate forwards or backwards along the x-axis direction, with the first end of the cutter plate being pivotally mounted to the primary cutter assembly, so as to adjust the angle of the cutter plate. The pivot point for the cutter plate may be at the location of the primary knife or blade. Although the second end of the cutter plate will move relative to the secondary cutter assembly, it will be readily understood that the mechanical connection between the cutter plate and the secondary cutter assembly is maintained. Alternatively, a suitable actuator may be provided in the primary cutter head or assembly for adjusting the angle of the cutter plate - e.g., if the cutter plate is pivotally mounted to the primary cutter assembly, the actuator may be adapted to pivot the cutter plate about the pivot point. The pivot point for the cutter plate may be at the location of the primary knife or blade.

If the cutter plate is fitted, the cutting information in the digital file used by the control unit is preferably simplified to take account of the secondary knives or blades. For example, if the workpiece is printed with an (r x c) array of discrete images or designs, each image or design would normally be associated with a respective kiss cutting outline so that the cutting information would normally include a matching or corresponding (r x c) array of discrete kiss cutting outlines. This will form a (r x c) array of removable portions and a corresponding (r x c) array of domed stickers once the coating material has been applied. But if a suitable cutter plate is fitted, the cutting information only needs to include one column of kiss cutting outlines (e.g., an (r x 1) array of discrete kiss cutting outlines) that will be kiss cut by the primary knife or blade. This is because the remaining kiss cutting outlines will be automatically kiss cut by the secondary knives or blades that are mounted to the cutter plate and they do not need to be included as cutting information in the digital file. This still forms a (r x c) array of removable positions and a corresponding (r x c) array of domed stickers once the coating material has been applied.

Optical recognition may be used to allow the control unit to automatically adjust the angle of the cutter plate to compensate for any misalignment of the workpiece on the flatbed - i.e., where the rows of printed images or designs are not exactly aligned with the y-axis direction of the digital flatbed cutter.

When the cutter plate is not required, it may be removed from the primary cutter assembly and the digital flatbed cutter may be used conventionally. If a secondary cutter head is provided, the cutter plate is also removed from the secondary cutter assembly and the secondary cutter head may be manually moved to a "parking" area on the support rail where it will not interfere with the conventional operation of the digital flatbed cutter.

The digital flatbed cutter may include a primary cutter head mounted to the head unit and including a primary cutter assembly with a primary knife or blade for kiss cutting the workpiece. The primary cutter assembly may be movable along a z-axis direction that is normal to the plane and perpendicular to the x- and y-axes. The digital flatbed cutter may also include at least one secondary knife or blade movable in tandem with the primary knife or blade for kiss cutting the workpiece in parallel with the primary knife or blade. The primary knife or blade and the at least one secondary knife or blade are aligned and spaced apart along a cutter axis. The angle of the cutter axis relative to the y-axis is preferably adjustable.

The cutter axis may be defined by a straight line that passes through the primary knife or blade and each secondary knife or blade.

The knives or blades may be substantially evenly spaced apart along the cutter axis, i.e., they may be spaced apart by the same predetermined distance as described above.

The at least one secondary knife or blade may be mounted in any suitable way that allows each secondary knife or blade to move in tandem with the primary knife or blade. This include movement in the x- and y-axes in the parallel plane about the flatbed, and movement in the z-axis direction, i.e., so that each secondary knife or blade moves up and down with the primary knife or blade. In one arrangement, which is described in more detail above, the digital flatbed cutter may further comprise a cutter plate mounted to the primary cutter assembly. The cutter plate will move in tandem with the primary cutter assembly and may be used to mount the at least one secondary knife or blade as described above. The cutter plate may therefore comprise the at least one secondary knife or blade. However, the at least one secondary knife or blade may also be mounted without using a cutter plate, for example by being mounted on the primary cutter assembly or where both the primary knife or blade and the at least one secondary knife or blade are mounted on a common cutter assembly that is part of the primary cutter head and movable along a z-axis direction.

The cutter plate may extend substantially along the y-axis direction, but its angle relative to the y-axis (e.g., relative to the primary cutter assembly) is adjustable. The cutter axis may be parallel to a longitudinal axis of the cutter plate. Adjusting the angle of the cutter plate will adjust the angle of the cutter axis. If a cutter plate is not provided, the angle of the cutter axis may be adjusted in another way, e.g., by moving each secondary knife or blade along the x-axis direction. Each secondary knife or blade may be moved along the x-axis direction by a suitable actuator, for example.

The cutter plate may be pivotally mounted to the primary cutter assembly.

The cutter plate may be removably mounted to the primary cutter assembly as described in more detail above.

The cutter plate may include at least one mounting means, each mounting means being configured to mount a respective secondary or blade. Each secondary knife or blade may be removably mounted to the cutter plate.

The at least one secondary knife or blade may be integrally formed with the cutter plate.

A plurality of different cutter plates may be provided, e.g., with a different number of secondary knives or blades and/or different spacing between the secondary knives or blades. The primary cutter assembly may also comprise a plate mount configured for removably mounting a selected one of the plurality of cutter plates. If a cutter plate is not provided, the spacing between the knives or blades along the cutter axis may be adjusted in another way, e.g., where each secondary knife or blade is moved along the cutter axis by a suitable actuator.

A first end of the cutter plate may be removably mounted to the primary cutter assembly. The digital flatbed cutter may further comprise a secondary cutter head including a secondary cutter assembly being movable in tandem with the primary cutter assembly. A second end of the cutter plate may be removably mounted to the secondary cutter assembly. The first end of the cutter plate may be pivotally mounted to the primary cutter assembly and the position of the second end of the cutter plate may be adjusted in the x-axis direction to adjust the angle of the cutter plate and the cutter axis. The second end of the cutter plate may be moved by a suitable actuator that forms part of the secondary cutter head or assembly. As described above, the suitable actuator may alternatively form part of the primary cutter head or assembly.

The digital flatbed cutter may further comprise a support rail that extends over the flatbed. The head unit may be configured to be movable along the support rail in the y-axis direction. The secondary cutter head may be configured to be movable along the support rail in the y-axis direction in tandem with the head unit and the primary cutter head.

The present invention further provides a method of forming domed stickers using a digital flatbed cutter, the digital flatbed cutter comprising:
a flatbed on which a workpiece may be positioned;
a head unit that is movable laterally along an x-axis direction and a perpendicular y-axis direction in a parallel plane above the flatbed;
a primary cutter head mounted to the head unit and including a primary cutter assembly with a primary knife or blade, the primary knife or blade being movable along a z-axis direction that is normal to the plane and perpendicular to the x- and y-axes;
a secondary cutter head including a secondary cutter assembly being movable in tandem with the primary cutter assembly;
a cutter plate, wherein a first end of the cutter plate is removably mounted to the primary cutter assembly and a second end of the cutter plate is removably mounted to the secondary cutter assembly, the cutter plate comprising at least one secondary knife or blade; and
a coating material applicator head mounted to the head unit;
the method comprising:
   positioning a workpiece on the flatbed, the workpiece being label stock with a cover layer, an adhesive layer, and a backing layer;
   using the primary and secondary knives or blades of the digital flatbed cutter to kiss cut the cover layer of the workpiece to form an array of removable portions of the cover layer; and
   using the coating material applicator head to apply coating material to each removable portion of the cover layer to form discrete domes of applied coating material, each domed sticker being defined by a removable portion of the cover layer and the overlying dome of applied coating material.

### Drawings

Figure 1 is a schematic front view of a digital flatbed cutter according to the present invention without a cutter plate fitted;
Figure 2A is a schematic side view of the digital flatbed cutter of Figure 1;
Figure 2B is a schematic side view of the digital flatbed cutter of Figure 1;
Figures 3A and 3B are schematic front views of the digital flatbed cutter of Figure 1 with a cutter plate fitted;
Figures 3C and 3D are schematic front views of an alternative digital flatbed cutter with a cutter plate fitted but without a secondary cutter assembly;
Figures 4A, 4B and 4C are schematic front views of different cutter plates according to the present invention;
Figure 5 is a top view of a first printed workpiece;
Figure 6 is a visual representation of cutting information of a first digital file for controlling the digital flatbed cutter according to the present invention;
Figure 7 is a top view of a second printed workpiece;
Figure 8 is a visual representation of cutting information of a second digital file for controlling the digital flatbed cutter according to the present invention;
Figure 9 is a top view of a third printed workpiece;
Figure 10 is a visual representation of cutting information of a third digital file for controlling the digital flatbed cutter according to the present invention;
Figures 11A and 11B are schematic top views showing how the angle of the cutter plate can be adjusted;
Figures 12A and 12B are schematic top views showing how the angle of the cutter axis can be adjusted if there is not cutter plate;
Figure 13 is a cross section view showing a plurality of domed stickers; and
Figures 14 to 16 are visual representations of coating material application information for digital files for controlling the digital flatbed cutter according to the present invention.

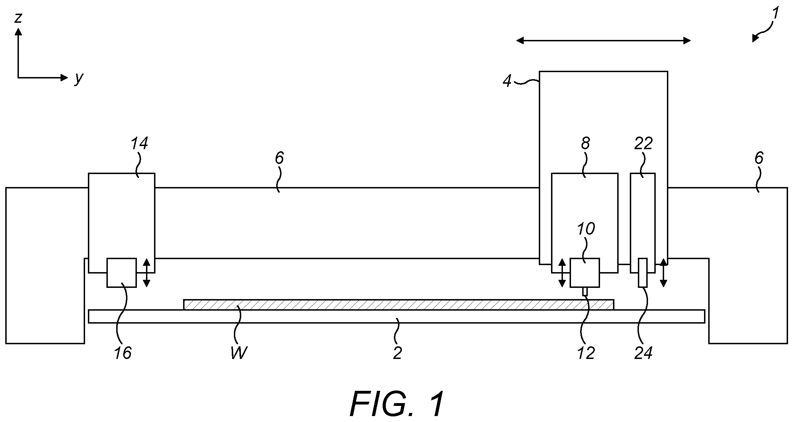

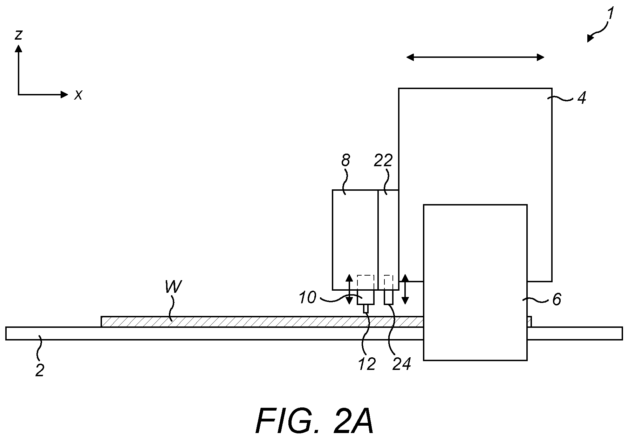

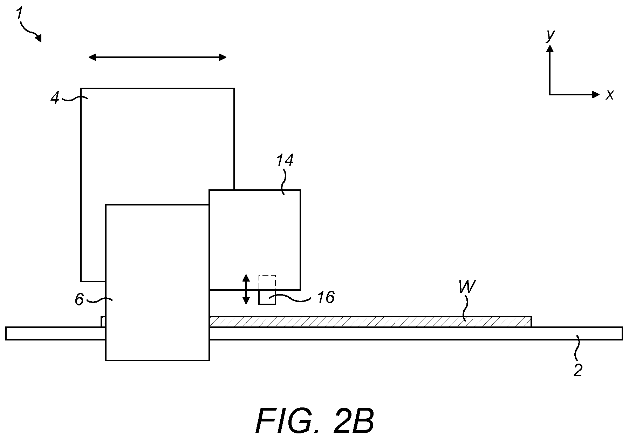

As shown in Figures 1, 2A, 2B, 3A and 3B, a digital flatbed cutter 1 includes a flatbed 2 on which a printed workpiece W can be positioned.

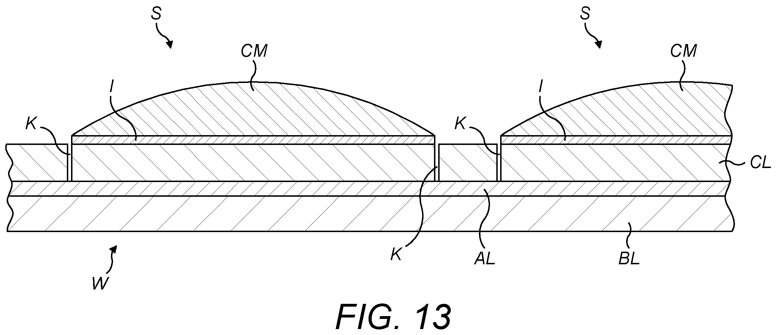

As shown in Figure 13, the workpiece W is a sheet of label stock with a printed cover layer (or "face stock") CL, an adhesive layer AL, and a backing layer BL. After the workpiece W has been kiss cut by the digital flatbed cutter 1 as described in more detail below, the kiss cuts K only extend through the cover layer CL and not into the backing layer BL.

A head unit 4 is mounted above the flatbed 2. The head unit 4 is mounted on a support rail 6 and can move from side-to-side along the support rail (i.e., along a y-axis direction) by a suitable actuator (not shown). The support rail 6 is mounted on side rails (not shown) and can move backwards and forwards along the side rails (i.e., along an x-axis direction) by one or more suitable actuators (not shown). The actuators are controlled by a control unit (not shown) which can include a suitable processor and a user input device such as a touch display screen or keypad, for example. By controlling the actuators, the head unit 4 can be positioned precisely and can be moved in any direction in a parallel plane above the flatbed 2 defined by the perpendicular x- and y-axes.

The head unit 4 includes a primary cutter head 8 with a primary cutter assembly 10 that is mounted so that it can move along the axis that is normal to the plane (i.e., along the z-axis direction) relative to the head unit. The primary cutter assembly 10 includes a primary knife or blade 12 that may be removably mounted. The primary cutter assembly 10 can be moved by an actuator between a first position - shown in Figures 1, 2A, 2B, 3A and 3B - where the primary knife or blade 12 is spaced apart from the workpiece W and a second position where the primary knife or blade is in contact with the workpiece for kiss cutting the cover layer CL of the workpiece W.

A secondary cutter head 14 is mounted on the support rail 6 and can move from side-to-side along the support rail (i.e., along the y-axis direction). In particular, the secondary cutter head 14 is mounted directly to the support rail 6, not indirectly like the primary cutter head 8 which is mounted to the head unit 4. The secondary cutter head 14 includes a secondary cutter assembly 16 that is mounted so that it be moved by an actuator along the z-axis direction in tandem with the primary cutter assembly 10. In Figure 1, the secondary cutter head 14 is shown in a "parking" area at an end of the support rail 6 where it may remain when it is not required - e.g., when only the primary knife or blade 12 is being used to kiss cut the workpiece.

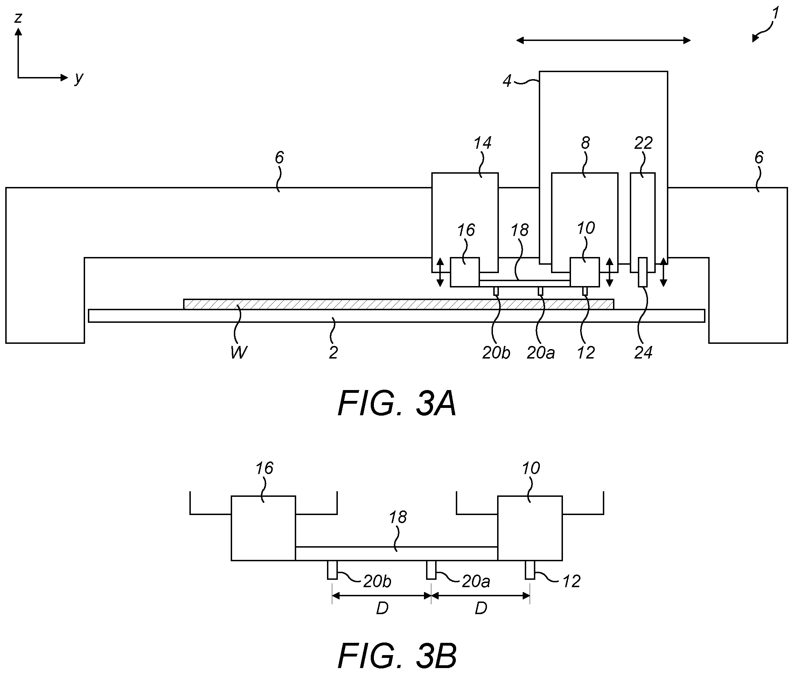

Figures 3A and 3B show a cutter plate 18 that is removably mounted between the primary and secondary cutter assemblies 10, 16. More particularly, a first end of the cutter plate 18 is removably mounted to the primary cutter assembly 10 and a second end of the cutter plate is removably mounted to the secondary cutter assembly 16 as shown. The cutter plate 18 is substantially rigid and extends along the y-axis direction. The cutter plate 18 is raised and lowered by the primary and secondary cutter assemblies 10, 16 which can be moved along the z-axis direction in tandem. A pair of secondary knives or blades 20a, 20b are removably mounted to the cutter plate 18. For example, the cutter plate 18 may include a pair of mounting openings or other mounting means to which each secondary knife or blade is fixed. Each secondary knife or blade 20a, 20b will remain temporarily fixed to the cutter plate 18 until it is deliberately removed by a user. Secondary knives or blades may therefore be used with different cutter plates. In other words, once a particular cutter plate has been selected, the required number of secondary knives or blades can be fixed to the cutter plate before it is mounted to the digital flatbed cutter. This avoids the need for each of the cutter plates to include one or more fixed secondary knives or blades. It also means that different types of secondary knives or blades can be used for different cutting processes or for different types of workpiece. Alternatively, the cutter plate can also have one or more fixed secondary knives or blades that are optionally integral with the cutter plate - i.e., not removably mounted - and the mounting means may therefore be omitted.

The secondary knives or blades 20a, 20b are spaced apart by a distance D (Figure 3B). When the cutter plate 18 is mounted to the primary cutter assembly 10, the secondary knife or blade 20a is spaced apart from the primary knife or blade 12 by the same distance D. This means that all three knives or blades are evenly spaced along the y-axis direction.

The secondary cutter head 14 and the secondary cutter assembly 16 are not essential.

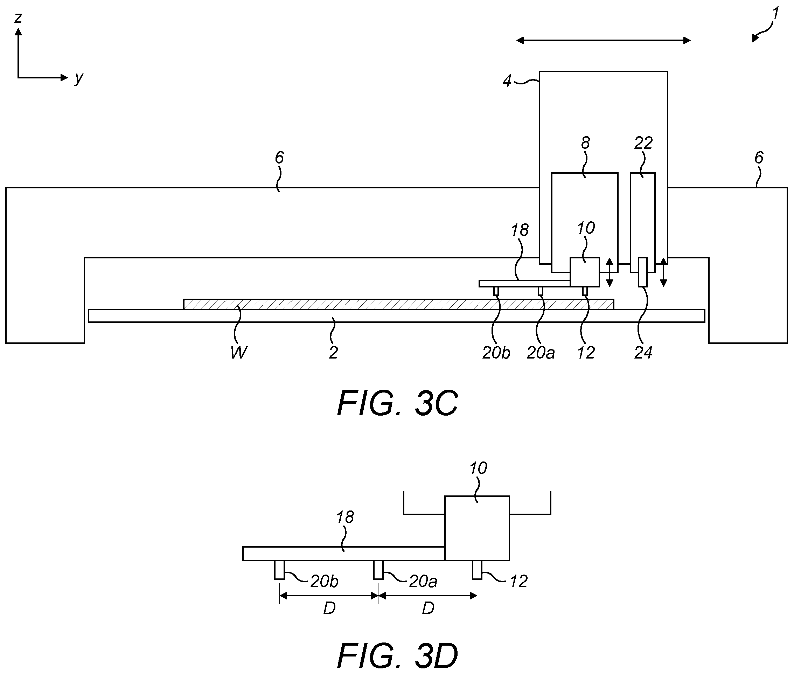

Figures 3C and 3D show a flatbed digital cutter 1 without the secondary cutter head 14 and the secondary cutter assembly 16. In this case, the second end of the cutter plate 18 is not supported.

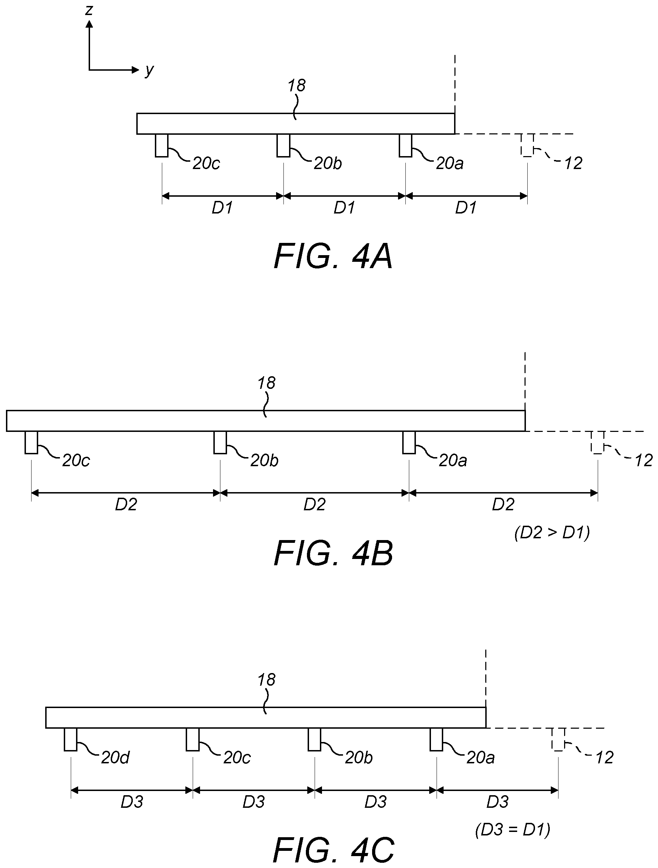

The cutter plate 18 may be selected from a plurality of different cutter plates. Figures 4A, 4B and 4C show some examples of different cutter plates 18 that include different numbers of secondary knives or blades, and/or different spacings. In all cases, the secondary knives or blades are evenly spaced apart along the y-axis direction. The secondary knife or blade 20a that is closest to the primary knife or blade 12 (shown ghosted) is also spaced apart from the primary knife of blade by the same predetermined distance so that all of the knives or blades are evenly spaced along the y-axis direction. Figure 4A shows a cutter plate 18 with three secondary knives or blades 20a, 20b, and 20c that are spaced apart by a predetermined distance D1. Figure 4B shows a cutter plate 18 with three secondary knives or blades 20a, 20b and 20c that are spaced apart by a predetermined distance D2, where D2 is greater than D1. Figure 4C shows a cutter plate 18 with four secondary knives or blades 20a, 20b, ..., 20d that are spaced apart by a predetermined distance D3, wherein D3 is equal to D1. A suitable cutter plate 18 may be selected and fitted to the digital flatbed cutter 1.

A coating material applicator head 22 is mounted to the head unit 4. The coating material applicator head 22 includes an applicator part such as a nozzle 24 that can move along the z-axis direction relative to the head unit 4. The nozzle 24 is fluidly connected to a source of coating material, e.g., a reservoir or tank (not shown).

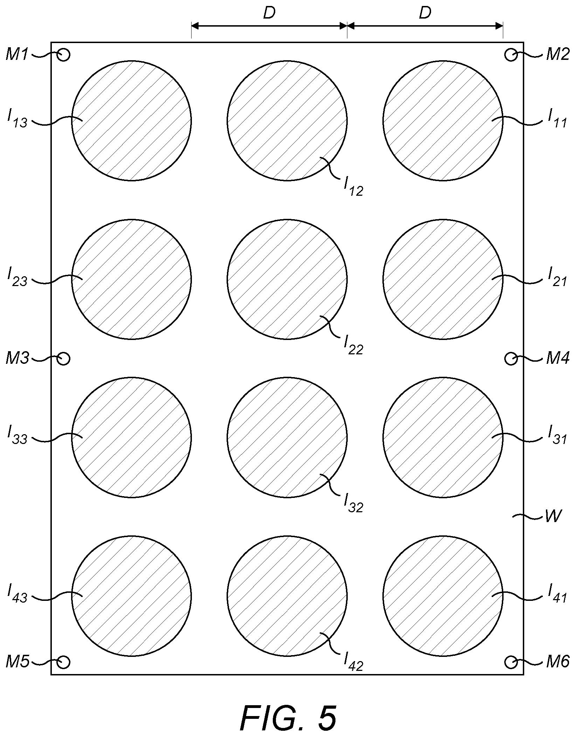

Figure 5 shows a first printed workpiece W that may be conveniently kiss cut using the cutter plate 18 shown in Figures 3A and 3B - i.e., with two secondary knives or blades 20a, 20b spaced apart by a predetermined distance D. The workpiece W is printed with a 4 x 3 array of discrete images or designs I₁₁, I₁₂, I₁₃, I₂₁, ..., I₄₃. The images or designs may be printed by any suitable printing process such as inkjet printing or laser printing, for example. The images or designs in each row are translated or shifted in the y-axis direction by the predetermined distance D that matches the spacing between the knives or blades.

The operation of the digital flatbed cutter 1 is controlled by a control unit (not shown).

The movement of the head unit 4 during a cutting process can be controlled by the control unit using a digital file.

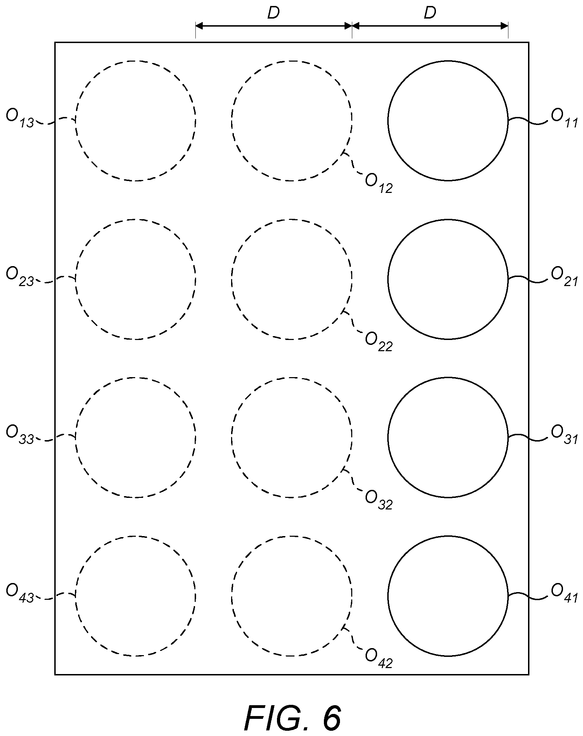

A visual representation of the digital file for cutting the first printed workpiece W is shown in Figure 6 where cutting information is shown in solid line. The cutting information includes a column of identical kiss cutting outlines O₁₁, O₂₁, ... O₄₁. The kiss cutting outlines O₁₁, O₂₁, ... O₄₁ indicate where the first workpiece W shown in Figure 5 should be kiss cut by the primary knife or blade 12. The workpiece W will be kiss cut in parallel by the secondary knives or blades 20a, 20b on the cutter plate 18. These identical kiss cutting outlines are shown in dashed line but do not form part of the cutting information that is used by the control unit. It will be understood that the kiss cutting outlines O₁₁, O₂₁, ... O₄₁ are only provided as a simple example, and that in practice they can have any suitable shape and will normally be determined by the shape of the printed areas on the workpiece that are to be cut around.

The first workpiece W also includes six printed registration marks M1, M2, ..., M6.

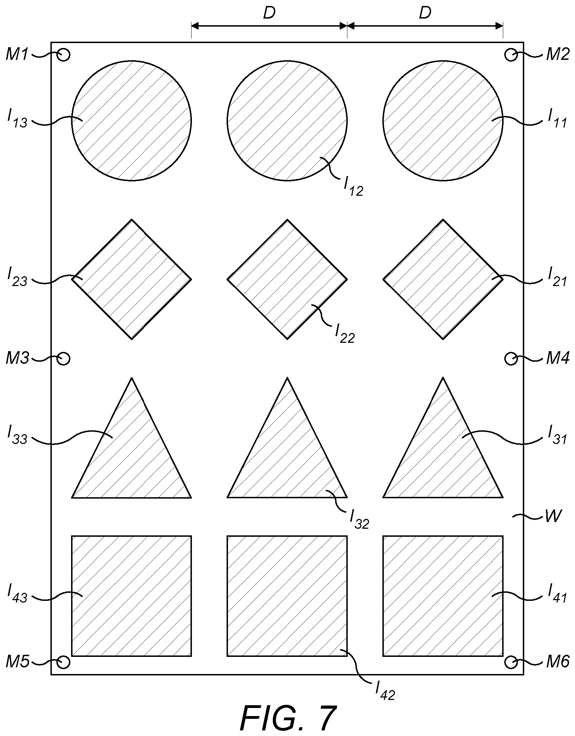

Figure 7 shows a second printed workpiece W that may be conveniently kiss cut using the cutter plate 18 shown in Figures 3A and 3B - i.e., with two secondary knives or blades 20a, 20b spaced apart by a predetermined distance D. The workpiece W is printed with a 4 x 3 array of discrete images or designs I₁₁, I₁₂, I₁₃, I₂₁, ..., I₄₃. The images or designs may be printed by any suitable printing process such as inkjet printing or laser printing, for example. The images or designs in each row are translated or shifted in the y-axis direction by the predetermined distance D that matches the spacing between the knives or blades. In this second workpiece W, the images or designs in the same row have the same shape, but the shape of the images or designs in each row is different.

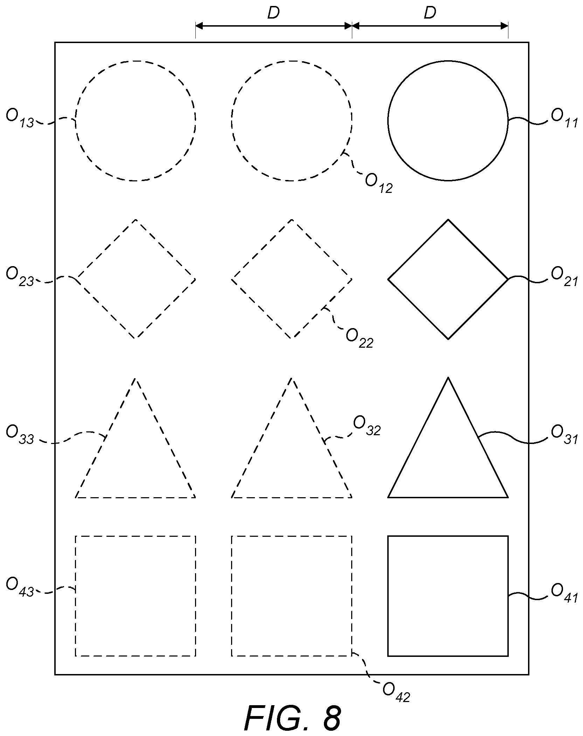

A visual representation of the digital file for cutting the second printed workpiece W is shown in Figure 8 where cutting information is shown in solid line. The cutting information includes a column of kiss cutting outlines O₁₁, O₂₁, ... O₄₁. The kiss cutting outlines O₁₁, O₂₁, ... O₄₁ indicate where the second workpiece W shown in Figure 7 should be kiss cut by the primary knife or blade 12. The workpiece W will be cut in parallel by the secondary knives or blades 20a, 20b on the cutter plate 18. These kiss cutting outlines are shown in dashed line but do not form part of the cutting information.

The second workpiece W also includes six printed registration marks M1, M2, ..., M6.

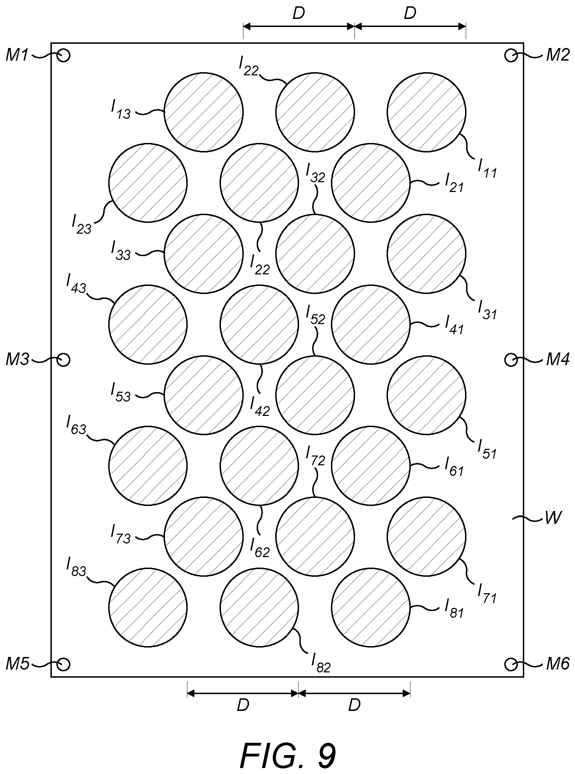

Figure 9 shows a third printed workpiece W that may be conveniently kiss cut using the cutter plate 18 shown in Figures 3A and 3B - i.e., with two secondary knives or blades 20a, 20b spaced apart by a predetermined distance D. The workpiece W is printed with an 8 x 3 array of discrete images or designs I₁₁, I₁₂, I₁₃, I₂₁, ..., I₈₃. The images or designs may be printed by any suitable printing process such as inkjet printing or laser printing, for example. The images or designs in each row are translated or shifted in the y-axis direction by the predetermined distance D that matches the spacing between the knives or blades. In this workpiece, the images or designs have the same shape but the rows are shifted with respect to each other.

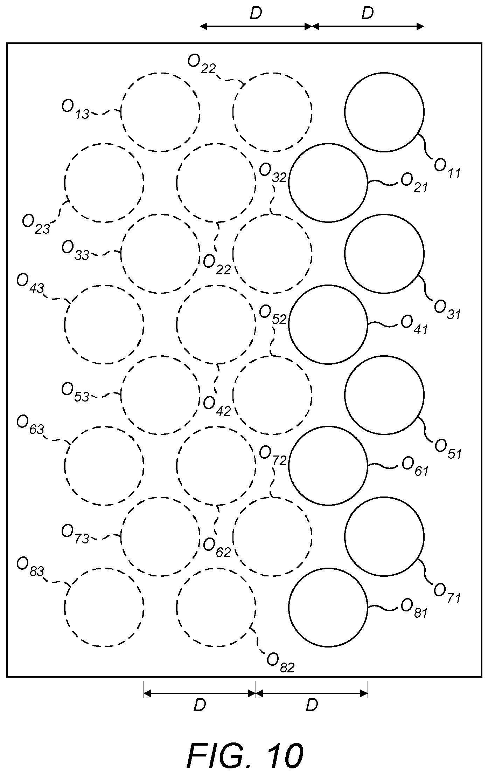

A visual representation of the digital file for cutting the third printed workpiece W is shown in Figure 10 where cutting information is shown in solid line. The cutting information includes a column of kiss cutting outlines O₁₁, O₂₁, ... O₈₁. The kiss cutting outlines O₁₁, O₂₁, ... O₈₁ indicate where the third workpiece W shown in Figure 9 should be kiss cut by the primary knife or blade 12. The workpiece W will be kiss cut in parallel by the secondary knives or blades 20a, 20b on the cutter plate 18. These kiss cutting outlines are shown in dashed line but do not form part of the cutting information.

The third workpiece W also includes six printed registration marks M1, M2, ..., M6.

The workpiece W shown in Figure 5, 7 or 9 is positioned on the flatbed 2 using the feed mechanism (not shown). A stack of identical printed workpieces can be located at an end of the flatbed 2 and an individual workpiece can be picked from the stack and positioned on the flatbed. The head unit 4 is precisely aligned with the workpiece W. For example, the head unit 4 can include a camera (not shown) and the control unit can use optical recognition of the printed registration marks M1, M2, ..., M6 to determine the precise position and orientation of the workpiece W on the flatbed 2. Once the head unit 4 has been precisely aligned relative to the workpiece W, the workpiece can be kiss cut by the primary knife or blade 12. The workpiece W will also be kiss cut in parallel by the secondary knives or blade 20a, 20b. In particular, the control unit can position the head unit 4 over the workpiece W so that the knives or blades are at the required position for cutting around the first row of the images or designs I₁₁, I₁₂, I₁₃. The control unit lowers the primary and secondary cutter assemblies 10, 16 - and hence the cutter plate 18 - until the primary and secondary knives or blades are in contact with the workpiece W. The control unit will then move the head unit 4 with the knives or blades in contact with the workpiece W to cut around the first row of images or designs - i.e., to simultaneously cut around the kiss cutting outlines O₁₁, O₁₂, O₁₃. The control unit raises the primary and secondary cutter assemblies 10, 16 to lift the primary and secondary knives or blades from the workpiece and re-positions the heat unit 4 over the workpiece so that the knives or blades are at the required position for cutting around the second row of images or designs I₂₁, I₂₂, I₂₃. The control unit lowers the primary and secondary cutter assemblies 10, 16 until the primary and secondary knives or blades are in contact with the workpiece W. The control unit will then move the head unit 4 with the knives or blades in contact with the workpiece W to cut around the second row of images or designs - i.e., to simultaneously cut around the kiss cutting outlines O₂₁, O₂₂, O₂₃. The same process is carried out to cut around the remaining rows. By using the cutter plate 18 with secondary knives or blades 20a, 20b, the digital flatbed cutter 1 can cut around an entire row of printed images or designs in the same time as it would have previously been possible to cut around a single image or design. It will be readily understood that a different cutter plate with three, four or five secondary knives or blades can be used to cut around an (r x 4), (r x 5) or (r x 6) array of discrete images or designs, where r is an integer indicating the number of images or designs arranged along the x-axis direction (i.e., number of rows). In general terms, a cutter plate with n secondary knives or blades can be used to cut around an (r x (n+1)) array of discrete images or designs, where n is an integer and (n+1) indicates the number of images or designs arranged along the y-axis direction (i.e., number of columns).

Movement of head unit 4 along the support rail 6 also moves the secondary cutter head 14 along the support rail because the cutter plate 18 is mechanically connected between the primary and secondary cutter assemblies 10, 16.

The digital flatbed cutter 1 can include a feed mechanism (not shown) for positioning a workpiece on the flatbed 2. Any suitable feed mechanism can be used, e.g., a vacuum feed that can be integrated into the head unit 4 or the support rail 6 and which can be used to pick up an individual workpiece from a stack and position it on the flatbed 2.

The flatbed 2 can be a conveyor belt which can be used to support the workpiece W while it is being worked and move the workpiece to a collection tray.

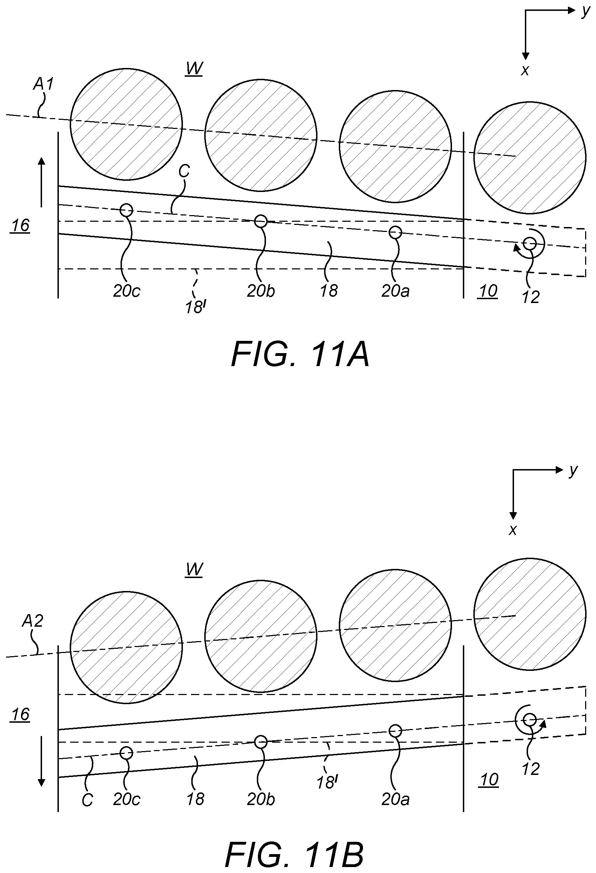

Figures 11A and 11B show how the angle of the cutter plate 18 can be adjusted to match the alignment A1, A2 of the rows of printed images or designs on the workpiece W. In particular, the first end of the cutter plate 18 is pivotally connected to the primary cutter assembly 10 and the secondary cutter assembly 16 includes a suitable actuator (not shown) that can move the second end of the cutter plate along the x-axis direction. A suitable actuator (not shown) may alternatively be provided as part of the primary cutter head or assembly 8, 10 and may adjust the angle of the cutter plate 18. This may be the case if the flatbed digital cutter 1 does not include a secondary cutter head 14, for example. The cutter plate 18 pivots about the location point of the primary knife or blade 12. The cutter axis C is shown as a straight line that passes through the primary knife or blade 12 and the secondary knives or blades 20a, 20b and 20c. It can be seen that the cutter axis C is parallel to a longitudinal axis of the cutter plate 18. In this example, the printed images or designs are not exactly aligned along the y-axis direction because of how the workpiece W is positioned on the flatbed 2. The misalignment is detected (e.g., using optical recognition of printed registration marks on the workpiece W) and the actuator is controlled to move the second end of the cutter plate 18 an appropriate distance along the x-axis direction so that the angle of the cutter plate 18 matches the alignment A1, A2 of the printed images or designs - i.e., until the cutter axis C is parallel to the alignment. After it has been adjusted, the angle of the cutter plate 18 remains fixed while the workpiece W is kiss cut. In Figures 11A and 11B the cutter plate 18' is shown ghosted in its initial position where it is extends exactly along the y-axis direction. The cutter plate 18 shown in Figures 11A and 11B is suitable for cutting a (r x 4) array of images or designs.

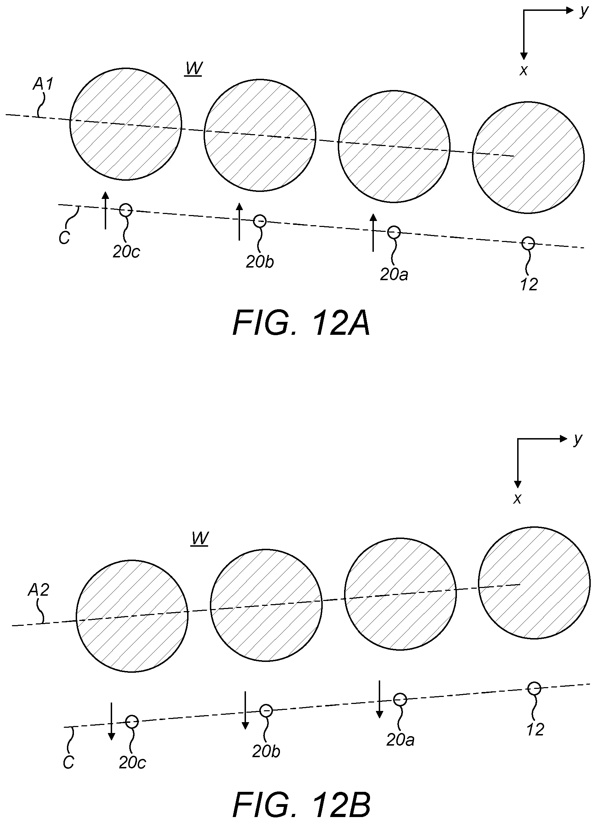

Figures 12A and 12B show how the angle of the cutter axis C can be adjusted to match the alignment A1, A2 of the rows of printed images or designs on the workpiece W. This alignment can be carried out without the need for a cutter plate 18. The secondary knives or blades 20a, 20b and 20c are mounted on the digital flatbed cutter so that they are movable in tandem with the primary knife or blade 12. In addition, each secondary knife or blade 20a, 20b and 20c can be moved along the x-axis direction by a suitable actuator (not shown). Each secondary knife or blade 20a, 20b and 20c may be moved the required distance along the x-axis direction - as indicated by the arrows - until the cutter axis C is parallel to the alignment A1, A2 of the rows of printed images or designs. (Suitable actuators (not shown) may also be used to adjust the spacing of the knives or blades along the cutter axis C. This may provide additional flexibility for spacing the knives or blades as compared with using a cutter plate.) In this example, the printed images or designs are not exactly aligned along the y-axis direction because of how the workpiece W is positioned on the flatbed 2. The misalignment is detected (e.g., using optical recognition of printed registration marks on the workpiece W) and the actuators are controlled to move the secondary knives or blades 20a, 20b and 20c an appropriate distance along the x-axis direction so that the angle of the cutter axis C matches the alignment A1, A2 of the printed images or designs. After it has been adjusted, the angle of the cutter axis C remains fixed while the workpiece W is kiss cut. In other words, the secondary knives or blades 20a, 20b and 20c remain fixed in position relative to each other and the primary knife or blade 12 during the parallel cutting process. The primary and secondary knives or blades 12 and 20a, 20b and 20c shown in Figures 12A and 12B are suitable for cutting a (r x 4) array of images or designs.

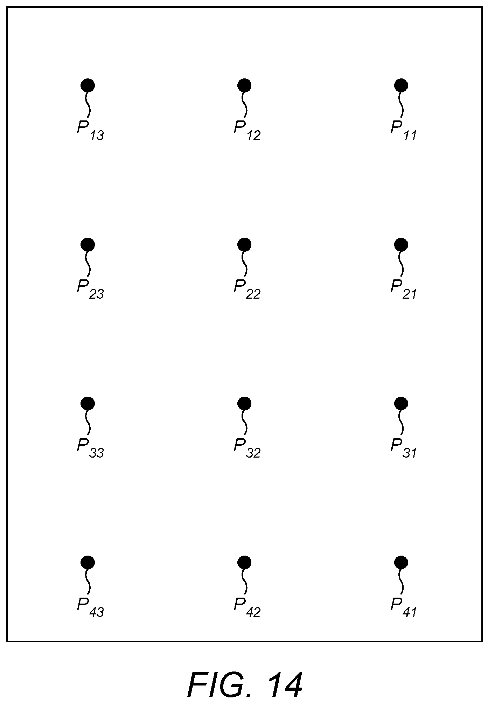

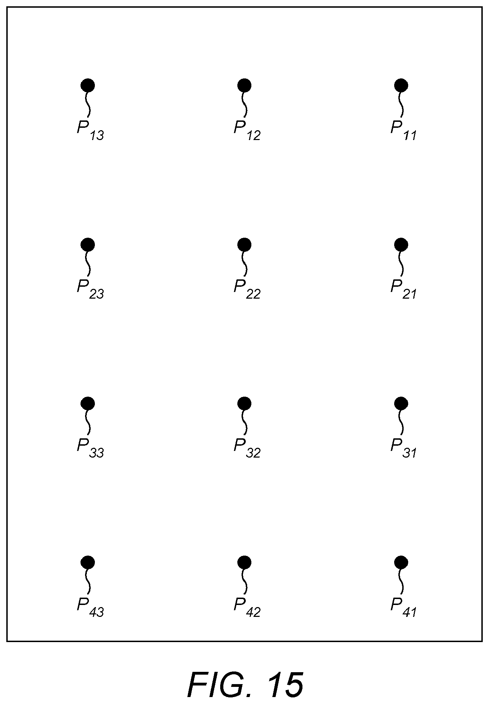

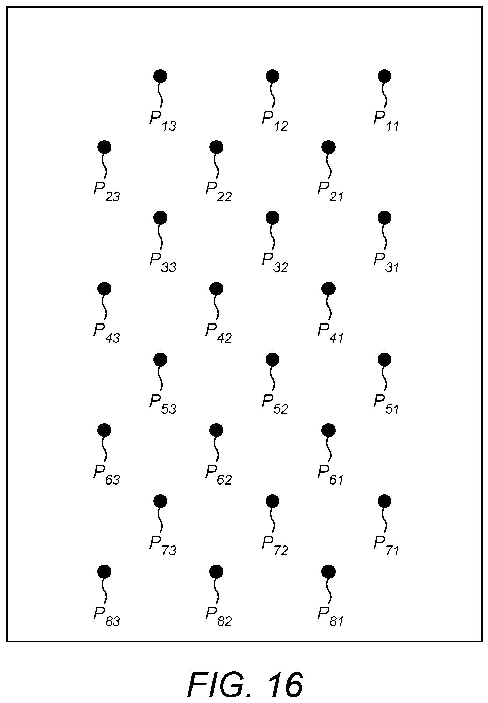

Kiss cutting the workpiece W forms an array of removable portions R in the cover layer CL - see Figure 13. The periphery of each removable portion R is defined by the respective kiss cut K. Each kiss cut K follows the respective kiss cutting outline O₁₁, O₁₂, O₁₃ etc. described above. A pre-determined amount of coating material (e.g., a liquid polyurethane resin) is applied to each removable portion R using the coating material applicator head 22. The coating material CM may be applied generally in the middle of each removable portion R and it spreads and is retained by the kiss cut K in the cover layer CL. In other words, the kiss cuts K prevent the applied coating material CM from spreading onto the remainder of the cover layer CL that lies outside the discrete removable portions R. Figures 14 to 16 show visual representations of the coating material application information that forms part of the digital files shown in Figures 6, 8 and 10. In particular, it will be readily understood that Figures 6, 8 and 10 show cutting information with kiss cutting outlines O₁₁, O₁₂, ..., O₈₃ along which the workpiece W is kiss cut by the digital flatbed cutter 1, whereas Figures 14 to 16 show coating material application information - i.e., the positions P₁₁, P₁₂, ..., P₈₃ where the coating material should be applied to the workpiece W by the coating material applicator head 22. The head unit 4 may be moved to each position in turn and a pre-determined amount of coating material is applied to the cover layer CL. Each position is generally at the middle of the respective removable portion of the cover layer CL. The applicator part 24 of the coating material applicator head 22 may be moved along the z-axis direction before, during, or after the process of applying the coating material.

Once the coating material CM has been applied to the removable portions R, the workpiece W may be removed from the digital flatbed cutter 1 and heated to cure the coating material, which hardens to form a durable (e.g., scratch and water resistant) coating with a domed shape. In some cases, the coating material may be hardened using a different technique which does not require heat to be applied. The coating material CM is typically about 2-3 mm thick at the centre of the removable portion R and tapers down towards the periphery to form the characteristic dome shape when viewed in profile - see Figure 13, for example. The coating material CM covers the printed image or design I but is transparent when hardened so that the primed image or design remains visible through the coating material.

Each domed sticker S is defined by a removable portion R and its overlaying dome of applied coating material CM. A domed sticker S may be peeled away from the backing layer BL and adhered to a surface using the exposed adhesive layer AL on the underside of the cover layer CL.

Although the above description explains how the cover layer CL of the workpiece W may be kiss cut using a primary knife or blade and one or more secondary knives or blades operating in tandem, it will be understood that the kiss cutting may be carried out using a digital flatbed cutter with a cutter head that only includes a single knife or blade - i.e., without using a cutter plate or the like. In this case, each removable portion R will be kiss cut sequentially by the knife or blade of the cutter head.

## Claims

1. A digital flatbed cutter (1) configured for working a workpiece (W) being label stock with a cover layer (CL), an adhesive layer (AL), and a backing layer (BL), the digital flatbed cutter (1) comprising:
a flatbed (2) on which the workpiece (W) may be positioned;
a head unit (4) that is movable laterally along an x-axis direction and a perpendicular y-axis direction in a parallel plane above the flatbed (2);
a primary cutter head (8) mounted to the head unit (4) and including a primary cutter assembly (10) with a primary knife or blade (12) for kiss cutting the cover layer (CL) of the workpiece (W), the primary knife or blade (12) being movable along a z-axis direction that is normal to the plane and perpendicular to the x- and y-axes;
a secondary cutter head (14) including a secondary cutter assembly (16) being movable in tandem with the primary cutter assembly (10);
a cutter plate (18), wherein a first end of the cutter plate (18) is removably mounted to the primary cutter assembly (10) and a second end of the cutter plate (18) is removably mounted to the secondary cutter assembly (16), the cutter plate (18) comprising at least one secondary knife or blade (20a, 20b) for kiss cutting the workpiece (W) in parallel with the primary knife or blade (12);
a coating material applicator head (22) mounted to the head unit (4) and configured to apply coating material to the cover layer (CL) of the workpiece (W); and
a control unit configured to control the movement of the head unit (4) using a digital file with cutting information which specifies where the cover layer (CL) of the workpiece (W) should be kiss cut by the primary and secondary knives or blades (12, 20a, 20b), and coating material application information which specifies where coating material should be applied to the cover layer (CL) of the workpiece (W).

2. A digital flatbed cutter (1) according to claim 1, wherein the coating material applicator head (22) is configured to apply transparent coating material to the cover layer (CL) of the workpiece (W).

3. A digital flatbed cutter (1) according to claim 1 or claim 2, wherein the coating material applicator head (22) is configured to apply a polyurethane resin to the cover layer (CL) of the workpiece (W).

4. A digital flatbed cutter (1) according to any preceding claim, wherein at least an applicator part (24) of the coating material applicator head (22) is movable along the z-axis direction.

5. A digital flatbed cutter (1) according to any preceding claim, further comprising a camera or other optical device, and wherein the control unit is configured to use optical recognition of one or more printed registration marks (M1, M2, ..., M6) on the workpiece (W) or the outline of the workpiece (W) to determine the position of the workpiece (W) on the flatbed (2).

6. A digital flatbed cutter (1) according to any preceding claim, further comprising a support rail (6) that extends over the flatbed (2), wherein the head unit (4) is configured to be movable along the support rail (6) in the y-axis direction.

7. A digital flatbed cutter (1) according to claim 6, wherein the secondary cutter head (14) is configured to be movable along the support rail (6) in the y-axis direction in tandem with the head unit (4) and the primary cutter head (8).

8. A digital flatbed cutter (1) according to any preceding claim, wherein the angle of the cutter plate (18) relative to the primary cutter assembly (10) is adjustable.

9. A digital flatbed cutter (1) according to preceding claim, wherein the cutter plate (18) is pivotally mounted to the primary cutter assembly (10).

10. A method of forming domed stickers (S) using a digital flatbed cutter (1), the digital flatbed cutter (1) comprising:
a flatbed (2);
a head unit (4) that is movable laterally along an x-axis direction and a perpendicular y-axis direction in a parallel plane above the flatbed (2);
a cutter head (8) mounted to the head unit (4) and including a knife or blade (12), the knife or blade (12) being movable along a z-axis direction that is normal to the plane and perpendicular to the x- and y-axes; and
a coating material applicator head (22) mounted to the head unit (4);
the method comprising:
positioning a workpiece (W) on the flatbed, the workpiece (W) being label stock with a cover layer (CL), an adhesive layer (AL), and a backing layer (BL);
using the knife or blade (12) of the cutter head (8) to kiss cut the cover layer (CL) of the workpiece (W) to form an array of removable portions (R) of the cover layer (CL); and
using the coating material applicator head (22) to apply coating material to each removable portion (R) of the cover layer (CL) to form discrete domes of applied coating material (CM), each domed sticker (S) being defined by a removable portion (R) of the cover layer (CL) and the overlying dome of applied coating material (CM).

11. A method according to claim 10, further comprising printing an array of images or designs on the surface of the cover layer (CL) before using the knife or blade (12) of the cutter head (8) to kiss cut the cover layer (CL) of the workpiece (W) to form an array of removable portions (R) of the cover layer (CL), each removable portion (R) coinciding with a respective printed image or design.

12. A method according to claim 10 or claim 11, further comprising curing the workpiece (W) to harden the applied coating material (CM).

13. A method according to claim 12, further comprising curing the workpiece (W) to harden the applied coating material (CM), then overprinting each hardened discrete dome of applied coating material (CM) with an image or design.

14. A method according to any of claims 10 to 13, wherein the coating material is a polyurethane resin.

15. A method of forming domed stickers (S) using the digital flatbed cutter (1) according to any of claims 1 to 9, the method comprising:
positioning a workpiece (W) on the flatbed (2), the workpiece (W) being label stock with a cover layer (CL), an adhesive layer (AL), and a backing layer (BL);
using the primary and secondary knives or blades (12, 20a, 20b) of the digital flatbed cutter (1) to kiss cut the cover layer (CL) of the workpiece (W) to form an array of removable portions (R) of the cover layer (CL); and
using the coating material applicator head (22) to apply coating material to each removable portion (R) of the cover layer (CL) to form discrete domes of applied coating material (CM), each domed sticker (S) being defined by a removable portion (R) of the cover layer and the overlying dome of applied coating material (CM).
